(19) Europäisches Patentamt / European Patent Office / Office européen des brevets

(11) **EP 4 759 117 A1**

(12) **EUROPEAN PATENT APPLICATION**

(43) Date of publication:
**17.06.2026 Bulletin 2026/25**

(21) Application number: **25213241.0**

(22) Date of filing: **04.11.2025**

(51) International Patent Classification (IPC):
**A01D 41/127** (2006.01) **G01F 1/86** (2006.01)

(52) Cooperative Patent Classification (CPC):
**A01D 41/127; G01F 23/2962**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.12.2024 GB 202418116**

(71) Applicant: **AGCO International GmbH**
**8212 Neuhausen am Rheinfall (CH)**

(72) Inventors:
• **CHRISTIANSEN, Martin Peter**
**8930 Randers (DK)**

• **LAURSEN, Morten Stigaard**
**8930 Randers (DK)**
• **TARRAGONA, Ramon Buchaca**
**8930 Randers (DK)**
• **KORSGAAARD, Steffen**
**Randers (DK)**
• **HERMANN, Dan**
**DK-8930 Randers NØ (DK)**
• **BILDE, Morten**
**DK-8930 Randers NØ (DK)**

(74) Representative: **AGCO Intellectual Property Department**
**AGCO Limited**
**Abbey Park Stoneleigh**
**Kenilworth CV8 2TQ (GB)**

(54) **MONITORING CROP IN A CROP BIN**

(57) A mechanism for determining a density of crop stored by a crop bin (390). Volume information and mass information of the crop is generated and processed to determine or derive the density of crop.

FIG. 3

EP 4 759 117 A1

**Description**

**FIELD**

Embodiments of the present disclosure relate generally to monitoring crop stored by a crop bin of a harvesting machine.

**BACKGROUND**

There is an increasing use and reliance upon agricultural machines to perform agricultural tasks within an agricultural environment. In particular, there is an increasing usage of harvesting machines, such as combine harvesters, (root) vegetable harvesters, berry harvesters or the like.

A harvesting machine may comprise a crop bin for storing harvested crops. For instance, where the harvesting machine is a combine harvester, the crop bin may be a grain bin for storing harvested grain. As another example, the harvesting machine may be designed to harvest root vegetables that can be stored in a vegetable bin. Other examples will be readily apparent to the skilled person.

It is known for a harvesting machine to monitor the amount of crop stored by in the crop bin of the harvesting machine. Typically, this is performed by monitoring, at discrete positions within the crop bin, whether or not the level of the crop exceeds each discrete position. This provides useful information for an operator of the harvesting machine to determine whether and/or when the crop bin needs to be emptied.

There is an ongoing demand to improve and supplement the information concerning the amount of crop stored by a crop bin of the harvesting machine. This would be useful to prevent or reduce a risk of crop spillage (e.g., due to overfilling of the crop bin) and/or to monitor harvest quantity and quality.

**BRIEF SUMMARY**

In accordance with a proposed approach, there is provided a crop monitoring system for a harvesting machine having a crop bin for storing harvested crop.

The crop monitoring system comprises a crop volume monitoring system configured to generate volume information that indicates a volume of crop stored by the crop bin; a crop mass sensing system configured to generate mass information that indicates a mass of crop stored by the crop bin; and a crop density system configured to process the volume information and the mass information to predict a density of the crop stored by the crop bin.

The present disclosure provides a mechanism for measuring or predicting the density of crop stored by a crop bin of a harvesting machine. A volume of the crop and a mass of the crop is determined and processed to predict the density of crop.

Embodiments are based on the realization that a density of crop provides valuable information for assessing the condition or quality of the crop, and in particular to facilitate detection whether there are any abnormal or unexpected properties of the crop in the crop bin. The present disclosure thereby provides a mechanism that facilitates determination of the density of the crop.

The determined density of the crop can be used, for instance, by an operator of the harvesting machine to perform one or more decision making processes about harvesting of future crop and/or any future processing (e.g., heating, treatment, filtering or drying) of the harvested crop. The operator may also use the determined density of the crop to identify potential errors or malfunctions with the harvesting machine, as an unexpected density may indicate an inappropriate processing of harvested material.

As another example, the determined density information may function as an input for a crop quality determination system, which determines a characteristic indicative of a quality of the crop using the density information. It has been recognized that a density of crop is an important indicator of quality which can be processed (optionally, together with other data about the crop) to produce more accurate quality information.

By way of example only, the density information may be integrated with other farm management systems. This integration may allow for comprehensive analysis of crop performance across different field locations, varieties, or growing conditions, leading to more informed decision-making for future planting and harvesting strategies.

From the foregoing, it will therefore be apparent determination of a density of the crop provide valuable information and insight into the quality and condition of the crop, as well as to facilitate improved performance of one or more manual/automated decision making and/or analytical processes.

In some embodiments, the crop bin comprises a base and the crop mass sensing system is responsive to movement of the base of the crop bin. The crop mass sensing system may comprise a displacement sensor configured to monitor a displacement of the base of the crop bin.

This configuration allows for accurate measurement of the mass of the crop with reduced risk of damage to the crop mass sensing system (e.g., from falling crop) and without occupying an interior volume of the crop bin. More particularly, the proposed approach avoids a need for positioning any element of the crop mass sensing system within the crop bin. This also facilitates improved access for maintenance and/or replacement of the crop bin and the crop mass sensing system.

In some embodiments, the crop mass sensing system comprises one or more load cells each configured to generate load information that changes responsive to a mass of crop stored by the crop bin, where the mass information is responsive to the load information produced by the one or more load cells. The use of one or more load cells facilitates reliable and precise mass measurements.

In some embodiments, the crop monitoring system further comprises an alert system configured to store predetermined density information identifying an expected density of crop stored by the crop bin, and generate alert information responsive to a difference between the predicted density of the crop stored by the crop bin to the expected density identified by the predetermined density information.

The alert information is able to provide an indicator of any density anomaly. This information can be useful for alerting an individual (e.g., an operator of a harvesting machine or agricultural technician) and/or for use by a further processing system.

In some embodiments, the crop volume monitoring system comprises a crop level sensing arrangement configured to generate crop level information that changes responsive to a level of crop within the crop bin, and a processing system configured to process the crop level information to generate the volume information. This approach provides a mechanism for generating volume information by determining a crop level, which facilitates high accurate measurement of the crop volume.

In some embodiments, the crop bin has a variable interior shape, and the crop volume monitoring system further comprises a bin shape sensing arrangement configured to generate shape information that changes responsive to changes in the interior shape of the crop bin. The processing system is configured to process the crop level information and the shape information to generate the volume information.

It is recognized that, by itself, a crop level within the bin may not be sufficiently accurate for assessing or indicating an amount of crop stored in the crop bin, particularly if the shape of the crop bin changes with different volumes and/or weights of crop contained therein. By determining shape information and determining a volume of the stored crop using the shape information, a more estimation of the volume of crop stored in the bin can be made.

In some embodiments, the crop bin comprises one or more side walls configured to move to adjust a capacity of the crop bin, and the shape information changes responsive to changes in the position of each side wall. By monitoring the angle of each side wall, it is possible to track changes in the interior shape of the crop bin to facilitate more precise crop volume calculations.

In some embodiments, the crop monitoring system further comprises a crop quality determination system configured to process the predicted density of the crop stored by the crop bin to produce quality information indicating a predicted quality of the crop stored by the crop bin.

It has been recognized that the crop density is indicative of other properties of the crop, such as its protein content and/or moisture content, which impact on the quality of the crop. Thus, it is possible to process the predicted density of the crop to assess or predict a quality of the crop stored by the crop bin.

Different quality parameters derivable from the predicted density of the crop will be apparent to the appropriately skilled person, such as moisture content and/or protein content. The precise parameters may, for instance, be dependent upon the type of crop being harvested and/or other available information.

The quality information may indicate a predicted moisture content of the crop stored by the crop bin.

In some embodiments, the crop monitoring system further comprises an output user interface configured to provide a user-perceptible output responsive to the predicted density of crop stored in the crop bin. The user-perceptible output may be responsive to the alert information.

This provides an operator or agricultural technician with information for identifying abnormal crop conditions after harvesting, which may be indicative of a problem with the crop and/or an unexpected characteristic of the crop. For instance, an abnormality in the density of the crop may indicate higher than desired moisture levels and/or impurities in the crop.

There is provided a harvesting machine comprising the crop monitoring system as described above. The harvesting machine may be a combine harvester. This integration of the crop monitoring system into harvesting machinery facilitates crop analysis during the harvesting process, facilitating live feedback of harvested crop.

There is also provided a method for determining a density of crop stored by a crop bin of a harvesting machine. The method includes generating, using a crop volume monitoring system, volume information that indicates a volume of crop stored by the crop bin, generating, using a crop mass sensing system, mass information that indicates a mass of crop stored by the crop bin, and processing the volume information and the mass information to predict a density of the crop stored by the crop bin.

## BRIEF DESCRIPTION OF THE DRAWINGS

One or more embodiments of the invention / disclosure will now be described, by way of example only, with reference to the accompanying drawings, in which:

FIG. 1 illustrates a harvesting machine;
FIG. 2 illustrates a proposed crop monitoring system;
FIG. 3 illustrates a crop mass sensing system;
FIG. 4 illustrates optional elements for a proposed crop monitoring system;
FIG. 5 illustrates a crop volume monitoring system; and
FIG. 6 illustrates a proposed method.

## DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method acts, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structures and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manner.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for determining a density of crop stored by a crop bin. Volume information and mass information of the crop is generated and processed to determine or derive the density of crop.

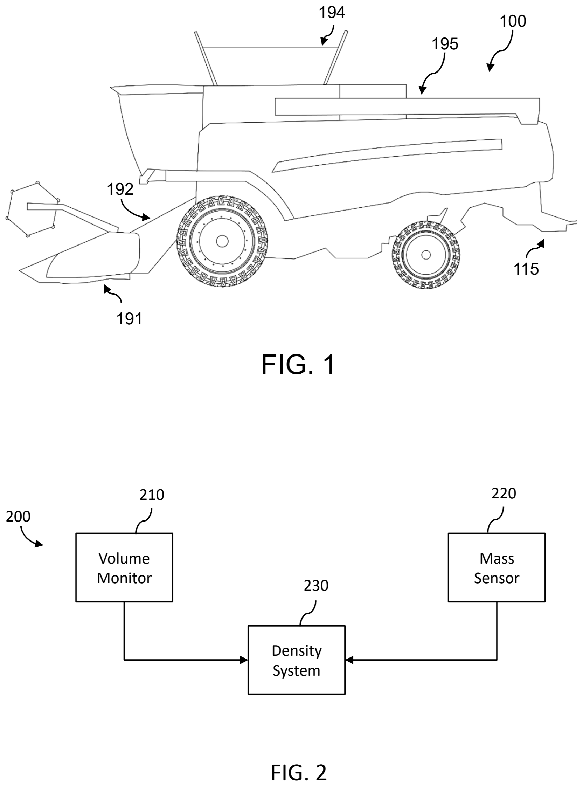

FIG. 1 illustrates a harvesting machine 100 in which proposed embodiments may be employed, for the sake of improved contextual understanding. The harvesting machine 100 is here embodied as a combine harvester, although embodiments are not restricted thereto.

The combine harvester 100 is coupled to a header 191 which is operable, in use, to cut and gather a strip of crop material as the combine harvester 100 is driven across a field / area to be harvested during a harvesting operation. A conveyor section 192 conveys the cut crop material from the header 192 into a crop processing apparatus (not visible in FIG. 1) operable to separate grain and non-grain (i.e., material other than grain (MOG) or residue material (used interchangeably herein)) as will be appreciated. It is noted here that apparatus for separating grain and non-grain material are well-known in the art and the present invention is not limited in this sense. The skilled person will appreciate that numerous different configurations for the crop processing apparatus may be used as appropriate. Clean grain separated from the cut crop material is moved by a grain elevator (not visible in FIG. 1) into a crop bin 194.

An alternative label for a crop bin, particularly in the context of a combine harvester, is a "grain bin", which may be used interchangeably.

The crop bin 194 may be periodically emptied, e.g., into a collection vehicle, storage container, etc. utilizing an unloading auger 195.

Remaining non-grain material (MOG) / residue material is separately moved to a spreader tool 115 which is operable in use to eject the non-grain material or MOG from the rear of the combine harvester 100 and onto the ground. It will be appreciated that in some embodiments the combine harvester 100 may also include a chopper tool positioned, for example, between the crop processing apparatus and the spreader tool 115 and operable, in use, to cut the residue material before it is spread by the spreader tool 115.

It would be advantageous to generate a prediction or measurement of one or more properties of the crop stored by the crop bin 194. The present disclosure recognizes that it would be particularly advantageous to provide a crop monitoring system that is able to predict a density of the crop stored by the crop bin.

In particular, the density of a crop is indicative of its quality (e.g., amount of protein and/or moisture content), such that it provides valuable information for an operator of the harvesting machine or later processor of the crop. For instance, a higher than expected density may indicate a high moisture content, and there a need or preference for drying before storage to prevent spoilage. As another example, a lower than expected density could indicate a high proportion of damaged or immature crop (e.g., grain), which can be used to influence or determine future harvesting decisions or techniques.

In this context, the density of crop defines a mass per unit volume of crop stored by a/the crop bin. This is expressible in any suitable unit of density (e.g., $kg/m^3$ or $g/cm^3$).

The present disclosure proposes to exploit the above recognitions to provide a mechanism for measuring or predicting the density of crop in a crop bin of a harvesting machine.

Proposed approaches may be employed in any form of harvesting machine, such as a combine harvester (e.g., as illustrated in FIG. 1), a forage harvester, mower, cotton harvester, fruit picker, root vegetable picker, or windrower. In all such harvesting devices, a crop bin stores crop harvested by the harvesting machine.

FIG. 2 schematically illustrates a proposed crop monitoring system 200 for a harvesting machine having a crop bin 290 for storing harvested crop. The crop monitoring system 200 comprises a crop volume monitoring system 210; a crop mass sensing system 220 and a crop density system 230 (which may be alternatively labelled a crop density estimation system or a crop density determination system).

The crop volume monitoring system 210 is configured to generate volume information that indicates a volume of crop stored by the crop bin. In particular, the volume information may comprise a measure of the volume of crop stored by the crop bin, which is expressible using any suitable unit of volume (e.g., liter, $cm^3$, $m^3$, gallon and so on).

One possible approach to predicting a crop volume is to determine or measure a crop level in the crop bin. The value of the crop level may then be mapped to an expected crop volume (at the crop level). Another approach is disclosed by the European Patent No. EP 3,448,144 published March 06, 2019. Another approach for determining a volume of product stored in a container on an agricultural machine is disclosed by US Patent Application No. US 2024/142289 A1 published May 02, 2024. Yet another approach is described later in this disclosure.

The crop mass sensing system 220 is configured to generate mass information that indicates a mass of crop stored by the crop bin. In particular, the mass information may comprise a measure of the mass of crop stored by the crop bin, which is expressible using any suitable unit of mass (e.g., kg, g, pound and so on).

In a simple example, the crop mass sensing system comprises one or more load cells each configured to generate load information. The load information changes responsive to a mass of crop stored by the crop bin. The mass information may be derived from the load information.

In this simple example, each load cell may, for instance, be positioned at a bottom of the crop bin, so that the weight or mass of the crop lies on top of the load cell. If a plurality of load cells are used, each load cell will measure a weight or mass of a different portion or part of the crop. The load information generated by each load cell can be extrapolated or otherwise processed to predict or measure a mass of the crop. Alternatively, the load information may itself be suitable to function as mass information (e.g., dependent upon the mechanism used by the crop density system, as later described).

Put another way, when the crop bin is filled, the weight of the crop exerts a force on the load cell. This force changes the electrical resistance of the load cell, and the resulting electrical signal is processable to determine or predict the mass of the crop.

Other approaches for generating mass information will be readily apparent to the skilled person. Suitable approaches for determining a mass (or weight) of product stored in a container on an agricultural machine are disclosed by US Patent Application No. US 2023/358707 A1. Another example approach is provided later in this disclosure.

The crop density system 230 is configured to process the volume information and the mass information to predict a density of the crop stored by the crop bin. The crop density system 230 may be embodied as a processing module of a processing system, examples of which are later described.

Where the volume information and the mass information comprise a measure of volume $V_C$ and a measure of mass $m_C$ respectively, then the crop density system 230 is able to trivially predict the density $\rho_c$ of the crop stored by the crop bin, i.e., using the following equation:

$$\frac{m_c}{V_c} = \rho_c \qquad\qquad (1)$$

In another example, the crop density system may be configured to map the volume information and mass information to a predicted density, e.g., using a lookup table, database or calibration curve/surface that correlates different combinations of volume information and mass information to corresponding density values. This lookup table may be populated based on historical data, empirical testing, or theoretical models. This approach can be used even where the volume information and/or the mass information does not comprise a measure of the volume/mass of the crop.

As yet another example, the crop density system may be configured to process the volume information and the mass information using one or more machine-learning algorithms to produce the predicted density. This approach can be used even where the volume information and/or the mass information does not comprise a measure of the volume/mass of the crop.

Embodiments may therefore make use of one or more machine-learning algorithms. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. Typically, such training approaches make use of a large database of known input and output data. The machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function. The precise mechanism for modifying the machine-learning algorithm depends upon the type of model. Example approaches for use with a neural network include gradient descent, backpropagation algorithms and so on.

For use in the above-described approach, the known input data comprises different combinations of volume information and mass information. The corresponding known output data comprises, for each combination, a density of the crop harvested by the harvesting machine.

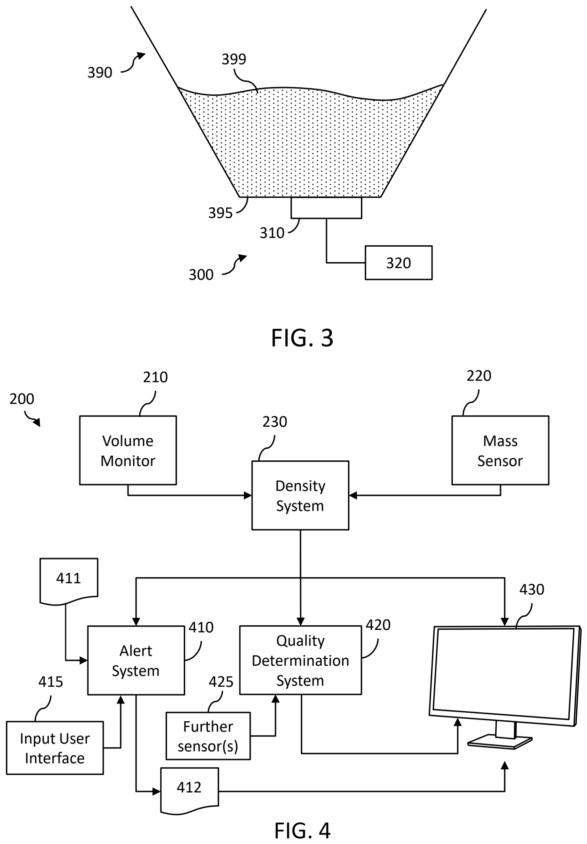

FIG. 3 illustrates an example crop mass sensing system 300 that may be employed in some embodiments.

The crop mass sensing system 300 is here configured for use with a crop bin 390 that comprises a base 395. The crop mass sensing system is responsive to movement of the base of the crop bin, i.e., the mass information is responsive to a movement of the base 390 of the crop bin.

It has been recognized that the position of the base 395 of a crop bin will naturally change (e.g., the base 395 will flex) as the mass of the crop 399 stored by the crop bin changes.

By way of example, the crop mass sensing system 300 may comprise a displacement sensor 310 configured to monitor a displacement of the base of the crop bin. In particular, the displacement sensor 310 may generate displacement information that changes responsive to the displacement of the base of the crop bin. The displacement information may, for instance, comprise one or more displacement values each indicating a displacement of a portion of the base of the crop bin.

The displacement information may, by itself, function as the mass information as it changes responsive to the mass of crop stored by the crop bin and is therefore indicative of of the mass of crop stored by the crop bin. Alternatively, as later exemplified, the displacement information may be further processed to produce the mass information.

A suitable example of a displacement sensor is a load cell that generates an electrical signal (i.e., load information) proportional to the force or weight applied to it. As the mass of crop in the bin increases, it exerts more force on the base, causing a greater displacement that is detected by the load cell. This displacement information from the load cell can then be processed to determine the mass of crop in the bin.

Other types of displacement sensors that may be used include linear variable differential transformers (LVDTs), capacitive sensors, or optical sensors. Each of these types of sensors is able to detect changes in the position of the bin base as the mass of the crop changes (e.g., crop is added to the crop bin), and generate displacement information responsive thereto.

The crop mass sensing system 300 may comprise a processing module 320 configured to receive the displacement information from the displacement sensor and produce mass information (e.g., determine a measure of mass of the crop stored in the crop bin). By way of example only, the processing module may use a calibration curve or lookup table that relates displacement values to corresponding mass values based on known or predetermined relationships for the specific crop bin and sensor configuration.

Suitable examples of a processing module are provided later in this disclosure.

FIG. 4 illustrates a crop monitoring system 200 comprising one or more further optional features or elements.

The crop monitoring system may further comprise an alert system 410.

The alert system 410 is configured to store predetermined density information 411 identifying an expected density of crop stored by the crop bin. For instance, the predetermined information may comprise an expected density value for the crop stored by the crop bin.

The alert system 410 is also configured to generate alert information 412 responsive to a difference between the predicted density of the crop stored by the crop bin to the expected density identified by the predetermined density information. This comparison allows the alert system to detect any significant deviations from the expected crop density, which could indicate issues or abnormalities with crop quality (e.g., an unexpected protein content), harvesting efficiency, or equipment malfunction (e.g., MOG or other undesired material passing to the crop bin).

In some examples, the alert system may be configured to use one or more thresholds, defined by the expected density of crop, to generate the alert information. The alert information may indicate whether the predicted density of the crop stored by the crop bin has breached any of these thresholds.

In a simple example, the expected density may be a single density defining a single threshold, and the alert information indicates (e.g., using binary data) whether or not the single threshold has been breached.

In a variant, the alert information may indicate whether or not the predicted density is within a predetermined margin (e.g., ±10%) of the expected density. This helps identify abnormal or unexpected values for the predicted density.

In some examples the predetermined density information may indicate a lower expected density and an upper expected density. These two densities effectively represent an expected range into which the (true) density of the crop is expected fall. The upper and lower expected densities may effectively define an upper threshold and a lower threshold respectively. The alert information may be configured to indicate whether or not the predicted density breaches the upper threshold (e.g., is greater than the upper threshold) or the lower threshold (e.g., is less than the lower threshold). This may be defined using categorical data (e.g., indicating whether the predicted density is below the lower threshold, between the lower and upper thresholds or greater than the upper threshold) or two binary data elements (e.g., each indicating whether or not the predicted density breaches a different one of the upper and lower thresholds).

Other suitable examples of alert information and mechanisms for defining the alert information will be apparent to the skilled person.

In some examples, the alert system 410 may be configured to store a plurality of instances of predetermined density information. Each instance corresponds to a different combination of one or more crop/harvesting properties, such as type of crop (e.g., species, variety), environmental conditions (e.g., moisture level), crop maturity (e.g., time since sowing or planting), and so on. The alert system may be configured to select the instance of predetermined information for particular combination of the one or more crop/harvesting properties for the crop (under investigation).

This approach recognizes that different crops or harvesting environments will affect the expected density of crop stored by the crop bin. For instance, different species or varieties of crops naturally have different densities. The stage of growth of the crop at harvest time is also likely to impact its density, with fully mature crops having different densities to immature crops.

In some scenarios, the appropriate instance of predetermined density information is selected by a user input, for example at an input user interface 415 for the crop monitoring system 200. This approach allows for real-time adjustments based on observed field conditions. Suitable input user interface(s) for use with this approach will be readily apparent to the skilled person.

In some scenarios, the appropriate instance of predetermined density information is selected (semi-)automatically responsive to crop analysis data, indicating the crop/harvesting properties of the crop in the crop bin. This crop analysis data may be produced by a crop analytic module 416 of the crop monitoring system, such as an image analysis system.

As a simple example, the crop analytic module may comprise a moisture sensor configured to determine a moisture content of the crop (which may form part of the crop analysis data), which can be used to select appropriate predetermined density information.

As a more complex example, the crop analytic module may be configured to perform image analysis of the crop to determine one or more properties of the crop (e.g., its type, maturity, or condition), which function as the crop analysis data. For instance, the crop analytic module may comprise a camera for capturing image data of the crop and an analytic processing module for processing the image data to determine one or more properties of the crop. Suitable examples approaches are known to the skilled person, such as those suggested by the US Patent Application having publication number US 2024/265674 A1. Other examples may employ, for instance, spectral analysis techniques to identify crop characteristics based on their unique reflectance patterns. Yet other examples may employ machine-learning algorithms to process image data to determine the one or more properties of the crop.

Of course, in some scenarios, the appropriate instance of predetermined density information is selected responsive to a user input and crop analysis data. For instance, the user input may be used to define the type of crop (e.g., species of crop) with the crop analysis data defining a moisture level of the crop, which can be processed by the alert system to select an appropriate instance of predetermined density information.

The crop monitoring system 200 may further comprise a crop quality determination system 420. The crop quality determination system 420 is configured to process the predicted density of the crop stored by the crop bin to produce quality information indicating a predicted quality of the crop stored by the crop bin.

As used herein, the term "quality information" refers to data that provides information about one or more attributes or characteristics of the crop stored in the crop bin that are representative of its quality. Quality information may include parameters such as moisture content, protein content, oil content, starch content, fiber content, or other nutritional or compositional aspects of the crop. In some cases, quality information may also or otherwise comprise bulk properties of the crop (such as the predicted presence of foreign materials) or indicators of crop damage or disease.

In a first example, the crop quality determination system 420 may be configured to process the predicted density of the crop to generate the quality information that indicates a predicted moisture content of the crop stored by the crop bin. For instance, the quality information may be a measure of moisture content of the crop.

In this first example, the crop quality determination system 420 may be configured to use a calibration curve or lookup table that relates predicted density values to corresponding moisture content values.

In some examples, a different calibration curve or lookup table is used for a different combination of one or more crop/harvesting properties, such as type of crop (e.g., species, variety), environmental conditions, crop maturity (e.g., time since sowing or planting), and so on. Approaches for appropriately identifying a combination of one or more crop/harvesting properties, such as responsive to a user input and/or crop analysis data, have been previously disclosed in the context of the alert system, and can be readily adapted for use with the crop quality determination system 420.

In this first example, the crop quality determination system may otherwise employ machine learning algorithms trained on historical data to predict moisture content from density measurements.

As a second example, the crop quality determination system 420 may be configured to process the predicted density of the crop to generate quality information that indicates a predicted protein content of the crop stored by the crop bin. Thus, the quality information may be a predicted measure of protein content. This approach is particularly useful for crops such as wheat or soybeans, where protein content is an important quality parameter.

For the second example, the crop quality determination system 420 may use a calibration curve or lookup table that relates predicted density values to corresponding protein content values for the specific crop type. The system 420 may also or otherwise employ machine learning algorithms trained on historical data to predict protein content from density measurements.

In some examples, a different calibration curve or lookup table is used for a different combination of one or more crop/harvesting properties, such as type of crop (e.g., species, variety), environmental conditions, crop maturity (e.g., time since sowing or planting), and so on. Approaches for appropriately identifying a combination of one or more crop/harvesting properties, such as responsive to a user input and/or crop analysis data, have been previously disclosed in the context of the alert system, and can be readily adapted for use with the crop quality determination system 420.

In some scenarios, the crop quality determination system 420 may be configured to combine the predicted density with other data, such as sensor data produced by one or more further sensors of the crop.

Thus, the crop monitoring system 200 may comprise one or more further sensors 425 that generate sensor data, which is used by the crop quality determination system 420 (alongside the crop density information) to produce the crop quality information. Suitable examples of sensors include near-infrared (NIR) sensors, temperature sensors, moisture sensors and so on to improve the accuracy of the quality information.

The crop monitoring system 200 may further comprise an output user interface 430 configured to provide a user-perceptible output responsive to the predicted density of crop stored in the crop bin.

In some examples, the user-perceptible output provides a user-perceptible representation of the predicted density, e.g., a visual representation or an audio representation of the predicted density. By way of example, the visual representation may be a digital display on an output user interface (e.g., dashboard or control panel) within a cabin of the harvesting machine. An audio representation may take the form of a voice alert indicating the predicted density.

In some examples, when the crop monitoring system 200 comprises the alert system 410, the user-perceptible output may be responsive to the alert information. For instance, the user-perceptible output may provide a user-perceptible representation of the alert information, e.g., a visual representation or an audio representation of the alert information.

For example, if the alert information indicates whether or not that the predicted density falls outside a predetermined margin of the expected density, then the user-perceptible output could manifest as a flashing red light on the dashboard or a warning tone in the cabin when the predicted density falls outside this margin, and is not present otherwise.

Of course, dependent upon the nature of the alert information, the output user interface may be configured to provide graduated user-perceptible alerts, e.g., with the intensity or frequency of the user-perceptible output changing as the predicted density approaches or deviates further from the expected density.

Some further examples of crop volume monitoring systems are hereafter described.

In some examples, the crop volume monitoring system comprises a crop level sensing arrangement configured to generate crop level information that changes responsive to a level of crop within the crop bin; and a processing system configured to process the crop level information to generate the volume information.

The crop level sensing arrangement may, for instance, be configured to determine a measure of crop level. The processing system may be configured to process of map the measure of crop level to a crop volume. By way of example, a lookup table or comparison curve may map different crop levels to respective crop volumes. The relationship between a (measured) crop level and a crop volume can be predetermined, e.g., during calibration.

As a working example, the crop level sensing arrangement may comprise a signal emitter configured to emit an acoustic and/or electromagnetic signal into crop stored by the crop bin; a monitoring device configured to monitor for one or more echoes or responses to the acoustic and/or electromagnetic signal; and a signal processing device configured to generate the crop level information responsive to a time difference between emission of the acoustic and/or electromagnetic signal and receipt of each of the one or more echoes or responses to the acoustic and/or electromagnetic signal.

Appropriate techniques that may be performed by a time-of-flight arrangement are well known to the skilled person.

By way of example, the signal emitter may include a timing mechanism that records the exact time (e.g., in the form of a first timestamp) when the acoustic or electromagnetic signal is emitted. The monitoring device may then record the time (e.g., in the form of a second timestamp) of when each echo or response is received. By comparing these timestamps, the signal processing device can calculate the time difference and thus determine the distance traveled by the signal, which corresponds to the crop level.

As another example, phase shifts may be utilized by emitting, using the signal emitter, a continuous wave signal and analyzing the phase difference between the emitted and received signals. As the crop level changes, the phase shift will vary proportionally. The signal processing device may be configured to interpret these phase shifts and correlate them to specific crop levels within the bin.

The echoes or responses (monitored by the monitoring device) may comprise an echo from an interface between the crop and air ("air-crop interface"). This facilitates accurate identification of the fill level without the need for any active devices or elements to respond to the emitted acoustic and/or electromagnetic signal and/or the provision of any passive element to be monitored by the monitoring device.

In the illustrated example, the signal emitter (and monitoring device) are positioned in/on a bottom, floor or base of the crop bin. In this way, the emitted acoustic and/or electromagnetic signal(s) propagate though any crop in the crop bin.

This placement provides for accurate detection of the crop-air interface at any fill level. In particular, by being fixed to the bottom of the crop bin, the signal emitter and monitoring device maintain a consistent reference point for measurements, regardless of changes in the interior shape of the crop bin. This configuration thereby facilitates more precise and reliable crop level sensing, as the distance between the signal emitter (or monitoring device) and the air-crop interface can be accurately measured even as the bin's shape changes.

Moreover, locating these components at the bottom/base of the bin helps protects them from potential damage or interference that could occur if they were positioned at the top of the bin, e.g., where they might be exposed to crop during any filling operation of the crop bin.

In an alternative example, the signal emitter (and monitoring device) are positioned at or near the top of the crop bin, emitting signals downward towards the crop surface. In this arrangement, the signal emitter and monitoring device may be protected from direct contact with the crop by being mounted above the maximum fill level of the bin.

Another example of a crop level sensing arrangement uses one or more capacitance sensors.

In this example, the crop sensing arrangement comprises a first capacitive plate and at least one second capacitive plate. The capacitive plates are positioned such that a capacitance between the first capacitive and each second capacitive plate changes responsive to the crop level within the crop bin. More particularly, as the crop level rises or falls, it alters the dielectric medium between the capacitive plates, causing a change in the capacitance between the first plate and each of the second plates.

The crop level sensing arrangement may thereby include circuitry to measure the capacitance between the first capacitive plate and each second capacitive plate. The measured capacitance(s) may be processed to determine or predict the crop level within the crop bin. For instance, the measured capacitance(s) may be compared to calibrated values (each associated with a different crop level) or used in mathematical models to calculate the crop level. In some cases, multiple capacitive plate pairs may be positioned at different heights within the crop bin to provide more precise level measurements across the entire range of possible crop levels.

Other suitable examples of crop level sensing arrangements will be readily apparent to the skilled person, which may be employed depending upon the nature of the crop bin.

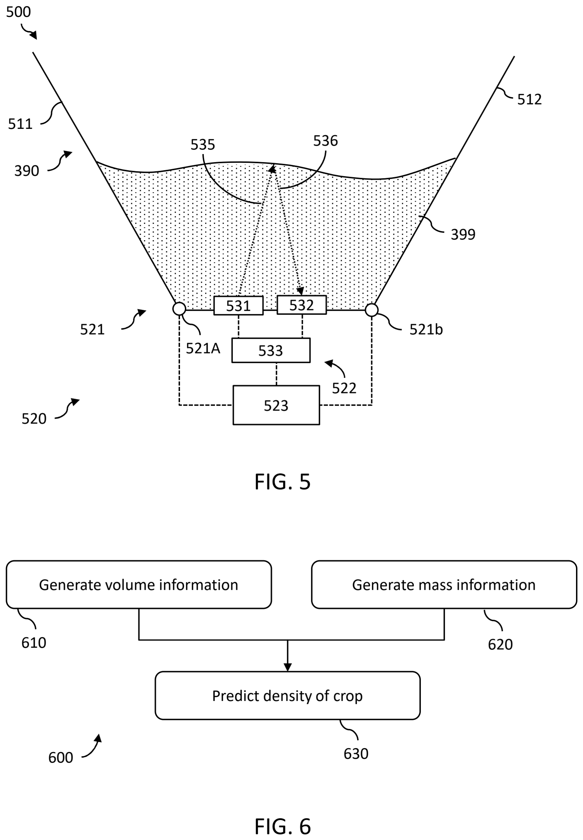

FIG. 5 illustrates a further example of a crop volume monitoring system 500, which may be used in some embodiments.

This embodiment recognizes that the interior shape of a crop bin may not be consistent, i.e., is variable. In some scenarios, the interior shape of the crop bin may be controlled independently of the crop stored by the crop bin, e.g., responsive to a user input or manual manipulation of the crop bin to define the interior shape of the crop bin. In some scenarios, the interior shape of the crop bin may change responsive to a weight and/or volume of crop pressing against the bounds of the crop bin.

The variation in the interior shape of the crop bin may be an intentional feature of the crop bin design (e.g., expands to accommodate additional crop). However, this is not essential.

Based on this recognition, it has been observed that it is likely that simply mapping a crop level to an expected crop volume be inaccurate, as any variation in the shape of the interior volume of the crop bin will affect the relationship between crop fill level and volume. As such, the crop level within the crop bin does not necessarily provide useful information about a volume of material contained in the crop bin.

The present approach proposes to exploit the above recognitions to provide a more accurate determination of the crop volume stored by the crop bin.

The crop volume determining system 520 is configured to determine a volume of crop 399 stored by the crop bin 390. The crop volume determining system 520 comprises a bin shape sensing arrangement 521, a crop level sensing arrangement 522 and a processing system 523.

The bin shape sensing arrangement 521 is configured to generate shape information that changes responsive to changes in the interior shape of the crop bin. Thus, as the interior shape of the crop bin changes, so should the shape information. By way of example only, the shape information may include data on the positions, angles, or dimensions of any side walls, panels, or other adjustable components of the crop bin.

In the context of the present disclosure, the "interior shape" of the crop bin may be defined by geometry (e.g., contours) and dimensions of the (inner) side walls 511, 512, floor, and (if present) ceiling that bound the interior volume of crop bin in which harvested crop is stored.

In some examples, the bin shape sensing arrangement may comprise one or more sensors or sensing arrangements such as angle sensors, position sensors, or strain gauges to detect changes in the interior shape of the crop bin.

For instance, for the illustrated example, the bin shape sensing arrangement 521 comprises at least one angle sensor 521A, 522B for monitoring the angle of each side wall 511, 512. Thus, the shape information comprises an angle measured or monitored by each angle sensor. Thus, as the angle of each side wall changes (e.g., pivots responsive to an increasing volume of crop), so the shape information (specifically, each angle indicated in the shape information) will change.

Suitable examples of angle sensors are well known to the skilled person, such as a rotary encoder or an inclinometer.

As another example, an angle sensor for a side wall may, for instance, comprise a magnet-sensor pair (e.g., comprising a magnet and a hall effect sensor) positioned at different locations on the side wall and a fixed reference point. As the side wall pivots, the relative position of the magnet and sensor changes, allowing the angle to be measured.

Other suitable examples of sensor or sensing arrangements for the bin shape sensing arrangement will be apparent to the skilled person. For instance, in some examples, the crop bin may include a flexible membrane or bladder that expands or contracts to accommodate varying crop volumes. The bin shape sensing arrangement may comprise one or more pressure sensors to detect changes in the membrane's shape and volume and thereby generate the shape information.

The crop level sensing arrangement 522 is configured to generate crop level information that changes responsive to a level of crop within the crop bin. Suitable examples of crop level sensing arrangements have been previously disclosed and may be employed in the present disclosure.

In the illustrated examples, the crop level sensing arrangement 522 comprises a signal emitter 531 configured to emit an acoustic and/or electromagnetic signal 535 into crop stored by the crop bin; a monitoring device 532 configured to monitor for one or more echoes or responses 536 to the acoustic and/or electromagnetic signal; and a signal processing device 533 configured to generate the crop level information responsive to a time difference between emission of the acoustic and/or electromagnetic signal and receipt of each of the one or more echoes or responses to the acoustic and/or electromagnetic signal.

Appropriate techniques that may be performed by a time-of-flight arrangement are well known to the skilled person, examples of which have been previously disclosed.

The processing system 523 is configured to process the shape information and the crop level information to predict a volume of crop stored by the crop bin.

As a simple working example, the processing system may be configured to map the shape information and crop level information to a predicted volume of crop. This mapping process may comprise using a lookup table or a mathematical model that correlates specific combinations of bin shape information (e.g., side wall angle(s) and crop level information to corresponding crop volumes. For instance, the processing system may maintain a database of pre-calculated volumes for various instances of bin shape information and crop level information, allowing for volume estimation by matching the available information to the closest pre-calculated scenario.

As another example, the processing system may process the shape information to construct a three-dimensional model of the interior volume of the crop bin ("bin model"). This may, for instance, be performed by processing the shape information to produce the bin model that represents a shape of an interior volume of the crop bin. The processing system may then use the bin model and the crop level information to determine the portion of the interior volume (represented by the bin model) that is filled with crop. For instance, the processing system may use the crop level information to identify the level of the interior volume, with the model space, that is reached by the crop. In the example in which the crop level information comprises a predicted distance between the air-crop interface and a base of the crop bin, this can be performed by identifying a surface that lies at the predicted distance from the representation of the base of the crop bin in the bin model. The processing system may then determine the volume of the crop to be the volume bound by the walls of the crop bin (defined by the bin model) and this identified surface.

Approaches for processing shape information to produce a bin model (i.e., predict the shape of the interior volume of the crop bin) would be readily apparent to the skilled person.

As a working example, the processing system may use a predefined geometric model or template ("base model") that is adjusted to produce the bin model based on the shape information. For instance, if the crop bin has a known basic shape (e.g. rectangular prism, trapezoidal prism, frustrum, cylinder), the processing system may start with the base model and modify its dimensions or geometry according to the current shape information to produce the bin model. As an example, if the shape information indicates an angle of one or more side walls, then the corresponding representation of the side wall(s) of the base model may be modified to reflect the angle of the side wall(s) in the shape information.

FIG. 6 is a flowchart illustrating a method 600 for determining a density of crop stored by a crop bin of a harvesting machine. The method 600 may be performed using the previously described crop monitoring system.

The method 600 comprises a step 610 of generating, using a crop volume monitoring system, volume information that indicates a volume of crop stored by the crop bin.

The method 600 also comprises a step 620 of generating, using a crop mass sensing system, mass information that indicates a mass of crop stored by the crop bin.

The method 600 also comprises a step 630 of processing the volume information and the mass information to predict a density of the crop stored by the crop bin.

Approaches for performing the steps of method 600 have been previously described in the context of the proposed crop monitoring system, and the skilled person would be readily capable of adapting the proposed method to perform the functionality of any such described crop monitoring system.

Embodiments make use of one or more processing systems, processing modules and/or other elements that may be embodied as a processing system or a processing module. Where appropriate, a single processing system may perform the function of one or more processing modules.

The skilled person will appreciate a wide variety of processing systems or processing modules capable of providing the desired functionality using software and/or hardware. In general, a processing system/module comprises one or more processing system components that co-operate to achieve the desired functionality.

As a working example, a processing system/module may be formed by a processor (e.g., comprising one or more microprocessors) that executes software/code to perform the desired functionality. However, other examples of processing systems or modules perform processing using dedicated hardware, or a combination of dedicated hardware and one or more appropriately programmed (micro)processors.

Examples of processing system components that may be employed include conventional microprocessors, digital signal processors (DSPs), application-specific integrated circuits (ASICs), field-programmable gate arrays (FPGAs), or any other suitable processing devices.

The processing system may also include memory devices, such as random access memory (RAM), read-only memory (ROM), flash memory, or other suitable memory types. These memory devices may store instructions, data, and intermediate processing results used by the processors. In some cases, the memory may be integrated with the processors, while in other implementations, it may be separate components connected via a bus or other communication channels.

The processing system may be embodied in a single package, e.g., carried by the harvesting machine or remote from the harvesting machine. In other examples, the processing system is distributed across a plurality of devices, e.g., a cloud computing network or similar.

It will be understood that disclosed methods are preferably computer-implemented methods. As such, there is also proposed the concept of a computer program comprising code means for implementing any described method when said program is run on a control system, such as a computer. Thus, different portions, lines or blocks of code of a computer program according to an embodiment may be executed by a control system or computer to perform any herein described method.

A computer program may be stored on a computer-readable medium, itself an embodiment of the invention. A "computer-readable medium" is any suitable mechanism or format that can store a program for later processing by a processing system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A crop monitoring system for a harvesting machine having a crop bin for storing harvested crop, the crop monitoring system comprising:

    a crop volume monitoring system configured to generate volume information that indicates a volume of crop stored by the crop bin;
    a crop mass sensing system configured to generate mass information that indicates a mass of crop stored by the crop bin; and
    a crop density system configured to process the volume information and the mass information to predict a density of the crop stored by the crop bin.

2. The crop monitoring system of claim 1, wherein the crop bin comprises a base and the crop mass sensing system is responsive to movement of the base of the crop bin.

3. The crop monitoring system of claim 2, wherein the crop mass sensing system comprises a displacement sensor configured to monitor a displacement of the base of the crop bin.

4. The crop monitoring system of any one of claims 1 to 3, wherein the crop mass sensing system comprises one or more load cells configured each configured to generate load information that changes responsive to a mass of crop stored by the crop bin, where the mass information is responsive to the load information produced by the one or more load cells.

5. The crop monitoring system of any one of claims 1 to 4, further comprising an alert system configured to:

    store predetermined density information identifying an expected density of crop stored by the crop bin; and
    generate alert information responsive to a difference between the predicted density of the crop stored by the crop bin to the expected density identified by the predetermined density information.

6. The crop monitoring system of any one of claims 1 to 5, wherein the crop volume monitoring system comprises:

   a crop level sensing arrangement configured to generate crop level information that changes responsive to a level of crop within the crop bin; and
   a processing system configured to process the crop level information to generate the volume information.

7. The crop monitoring system of claim 6, wherein:

   the crop bin has a variable interior shape;
   the crop volume monitoring system further comprises a bin shape sensing arrangement configured to generate shape information that changes responsive to changes in the interior shape of the crop bin; and
   the processing system is configured to process the crop level information and the shape information to generate the volume information.

8. The crop monitoring system of claim 7, wherein the crop bin comprises one or more side walls configured to move to adjust a capacity of the crop bin; and the shape information changes responsive to changes in the position of each side wall.

9. The crop monitoring system of any one of claims 1 to 8, further comprising a crop quality determination system configured to process the predicted density of the crop stored by the crop bin to produce quality information indicating a predicted quality of the crop stored by the crop bin.

10. The crop monitoring system of claim 9, wherein the quality information indicates a predicted moisture content of the crop stored by the crop bin.

11. The crop monitoring system of any one of claims 1 to 10, further comprising an output user interface configured to provide a user-perceptible output responsive to the predicted density of crop stored in the crop bin.

12. The crop monitoring system of claim 11, when dependent upon claim 5, wherein the user-perceptible output is responsive to the alert information.

13. A harvesting machine comprising the crop monitoring system of any one of claims 1 to 12.

14. The harvesting machine of claim 13, wherein the harvesting machine is a combine harvester.

15. A method for determining a density of crop stored by a crop bin of a harvesting machine, the method comprising:

   generating, using a crop volume monitoring system, volume information that indicates a volume of crop stored by the crop bin;
   generating, using a crop mass sensing system, mass information that indicates a mass of crop stored by the crop bin; and
   processing the volume information and the mass information to predict a density of the crop stored by the crop bin.

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

**Application Number**

EP 25 21 3241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 769 667 B1 (CLAAS SELBSTFAHR ERNTEMASCH [DE]) 17 February 2010 (2010-02-17) * paragraphs [0009], [0010], [0014], [0029] - [0034] * * claims 1-5 * * figures 1-4 * | 1-6,9-15 | INV. A01D41/127 G01F1/86 |
| X | EP 1 454 519 B1 (CLAAS SELBSTFAHR ERNTEMASCH [DE]) 2 June 2010 (2010-06-02) * claims 1-6 * * figure 1 * | 1,4, 13-15 | |
| X | US 2016/330906 A1 (ACHESON JOHN EARL [US] ET AL) 17 November 2016 (2016-11-17) * paragraph [0044] * * figure 1 * | 1,15 | |
| A | EP 0 303 899 A2 (DEERE & CO [US]) 22 February 1989 (1989-02-22) * column 3, line 34 - column 4, line 4 * * column 5, line 15 - line 25 * * column 6, line 10 - line 16 * * column 7, line 4 - line 9 * * figure 1 * | 1-15 | |

**TECHNICAL FIELDS SEARCHED (IPC)**

A01D

The present search report has been drawn up for all claims

| Place of search | Date of completion of the search | Examiner |
|---|---|---|
| Munich | 9 March 2026 | Ikas, Gerhard |

EPO FORM 1503 03.82 (P4C01)

## ANNEX TO THE EUROPEAN SEARCH REPORT
## ON EUROPEAN PATENT APPLICATION NO.

EP 25 21 3241

This annex lists the patent family members relating to the patent documents cited in  the above-mentioned European search report.
The members are as contained in the European Patent Office EDP file on
The European Patent Office is in no way liable for these particulars which are merely given for the purpose of information.

09-03-2026

| Patent document cited in search report | | Publication date | Patent family member(s) | | Publication date |
|---|---|---|---|---|---|
| EP  1769667 | B1 | 17-02-2010 | AT | E457629 T1 | 15-03-2010 |
| | | | DE | 102005047335 A1 | 12-04-2007 |
| | | | EP | 1769667 A1 | 04-04-2007 |
| | | | RU | 2006133244 A | 27-03-2008 |
| | | | US | 2007089389 A1 | 26-04-2007 |
| EP  1454519 | B1 | 02-06-2010 | AT | E469540 T1 | 15-06-2010 |
| | | | DE | 10306725 A1 | 16-09-2004 |
| | | | EP | 1454519 A1 | 08-09-2004 |
| | | | US | 2004200200 A1 | 14-10-2004 |
| US 2016330906 | A1 | 17-11-2016 | NONE | | |
| EP  0303899 | A2 | 22-02-1989 | DE | 3726930 A1 | 23-02-1989 |
| | | | DK | 453088 A | 14-02-1989 |
| | | | EP | 0303899 A2 | 22-02-1989 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3448144 A
- US 2024142289 A1
- US 2023358707 A1
- US 2024265674 A1